# EUROPEAN PATENT APPLICATION

(11) **EP 4 842 011 A1**
(43) Date of publication of application: **18.11.2026**
(21) Application number: 25175729.0
(22) Date of filing: 12.05.2025
(51) Int. Cl.: H04R 1/10, A45C 11/00, H01M 50/271, H04R 25/00

(54) **EARBUD LID ASSEMBLY**

(71) Applicant: BANG & OLUFSEN A/S, 7600 Struer (DK)
(72) Inventor: ANTONSEN, Oliver Lisbygd, 7600 Struer (DK); BREDAHL, Anders Korsgaard, 7600 Struer (DK)
(74) Representative: Patrade A/S

(57) **Abstract**

The present invention discloses a mechanism comprising a compliant mechanism (10) and a base (50). The base (50) is provided with a central circular hub (52) upstanding from the base (50), said hub (52) having a radius X from a centre C of the hub (52), and at the periphery (54) of the base there is a number of barrier sections, with a number of openings (58) between the barrier sections. The compliant mechanism has a core (12) with a central opening (14) said opening having a diameter larger than 2 x X, and that a plurality of curved arms (16,16',16") extends from said core (12) in a x-y plane (100) common for the central opening (14), the core (12) and the curved arms (16,16',16"), where each curved arm (16,16',16") at a distal end is provided with a wedge (18), where each wedge (18) when the compliant mechanism (10) is mounted in the base (50) by passing the central opening (14) over the hub (52), is adapted to pass through an opening (58) in the periphery (54) of the base (50). The invention further discloses an openable enclosure (90) having an enclosure body (32) with an open end (34) and a lid assembly (36), said lid assembly including a mechanism according to any of claims 1 to 13. And finally, an earbud construction incorporating a mechanism according to any of claims 1 to 13 in a battery compartment lid assembly (36) is disclosed.

## Description

### Field of the Invention

The present invention is directed to a mechanism comprising a compliant mechanism as well as an openable enclosure provided with a lid assembly which lid assembly includes a mechanism as described, and further the invention is also directed to an earbud construction where a mechanism as described and set out in the claims is incorporated.

### Background of the Invention

In the art there is a number of mechanisms including a compliant mechanism where the compliant mechanism is very complicated and relies on a number of elements being deformed depending on each other and at the same time. An example of such a compliant mechanism is disclosed in US 10767675B2.

In a number of electronic devices there is incorporated a battery compartment which is typically accessible from the outside. The accessibility is provided in order to be able to replace the battery once the battery runs low or is dead such that the power for the electronic device may be reestablished. In some devices the batteries are rechargeable such that it is not necessary to replace the battery within the expected life expectancy of the electronic device in that the rechargeable battery is believed to be able to provide enough recharge cycles to provide a sufficient life expectancy of the entire electronic device. However, recent guidelines as well as directives from the European Union have focused on this and in view of the sustainability of electronic devices, it is becoming a requirement that also rechargeable batteries must be built into electronic devices in such a manner that they are replaceable. This often necessitates the provision of a lid or other access opening to the battery compartment. The further implications of allowing access to the interior of an electronic device which was not originally designed to allow a nonprofessional user access to the battery compartment further requires other design features or redesign features such that a nonprofessional user does not inadvertently gain access to fragile components of the electronic device.

In addition to providing access to the battery compartment, the access for many devices must also be both dust and moisture proof such that the overall IP rating of the device is not compromised by the provision of a lid giving access for example to the battery compartment.

A further aspect which has to be considered is the overall design of the device in that for a number of wearable electronics, the design of the surfaces is very important to the user. Therefore, the design shall appear as smooth and elegant as the original designer contemplated. This requires that for example the accessibility to the battery compartment is not too clumsy or stands out in a such a way that it is detrimental to the overall design of the electronic device.

Furthermore, as many wearables electronic devices need to be compact in size, the provision of an accessible battery compartment must not compromise the product's dimensions in a significant way.

### Object of the Invention

It is therefore an object of the present invention to provide a mechanism which in some applications provides substantial advantages such that it may be used as a lid for example to close an enclosure which enclosure may for example be a battery compartment.

### Description of the Invention

The present invention is therefore defined by a mechanism comprising a compliant mechanism (10) and a base (50), where:
a. the base (50) is provided with a central circular hub (52) upstanding from the base (50), said hub (52) having a radius X from a center C of the hub (52), and at a distance with a radius Y from the center C is formed a number of barrier sections (56) where the radius Y is measured to an inner side face (68), such that a number of openings (58) between barrier sections (56) together with the barrier sections (56) define a periphery (54);
b. the compliant mechanism (10) has a core (12) with a central opening (14) said opening having a diameter larger than 2 x X, and that a plurality of curved arms (16,16',16") extends from said core (12) in a x-y plane (100) common for the central opening (14), the core (12) and the curved arms (16,16',16"), where each curved arm (16,16',16") at a distal end is provided with a wedge (18), where each wedge (18) when the compliant mechanism (10) is mounted in the base (50) by passing the central opening (14) over the hub (52), is adapted to pass through an opening (58) in the periphery (54) of the base (50).

The compliant mechanism has a core from which a number of curved arms extends. Furthermore, the compliant mechanism, particularly the core, is provided with a central opening which fits over a hub in a base such that if a distal end of one curved arm is pressed towards the center of the hub, a slight rotation of the compliant mechanism will occur. The base is furthermore provided with barrier sections such that the remaining curved arms will be influenced by the barrier sections and therefore, when one curved arm is forced towards the center of the hub, the distal ends of all curved arms will be moved towards the center of the hub as well. Likewise, when the force is relieved from one curved arm, the compliant mechanism will rotate back and extend the distal ends of all curved arms away from the center of the hub. In this manner a single applied force to a distal end of one curved arm will be translated into movement of all distal ends of all curved arms. The barrier sections provided on the base serve to hinder that the wedges arranged at the distal ends of the curved arms only rotate, but by engagement between the wedge and the barrier sections, the wedges will be forced inwards towards the center of the hub such that the barrier sections serve to guide the movement of the wedges as one wedge is urged towards the center of the hub.

In a further advantageous embodiment of the invention, the radius Y increases from a first end (60) of a barrier section (56) to a second end (62) of the same barrier section (56). In this special embodiment, the wall of the barrier section facing the hub will guide the curved arms during the rotational movement in order to achieve a smooth transition of the radial force into a radial movement of the wedge together with a slight rotational movement of the core of the compliant mechanism.

In yet another advantageous embodiment of the invention, the barrier section has a first end (60) and a second end (62) where said first end (60) has a first end face (64) and the second end (62) has a second end face (84), where said end faces are arranged at an angle with respect to a radial (80) passing through the center C of the hub (52) and the point of the end face (64) closest to the center C. By providing the ends of the barrier sections which are to come into contact with the wedges with a slight angle with respect to a radial, the barrier sections help to guide the wedge sections during the movement occurring when a force is exerted on one wedge section towards the center of the hub. As already mentioned above, the radial force applied to one wedge will urge the wedge towards the center and by sliding on the end face of the barrier section, the wedge may be guided both towards the center and also for a slight rotation around the hub. This slight rotation will cause the other wedges to be drawn towards the center also guided by end faces of the adjacent barrier sections to the particular wedges arranged at the remaining curved arms.

As already described above the barrier section serves to guide the curved arms and wedges of the compliant mechanism and therefore, in a further advantageous embodiment of the invention the barrier section has a first end (60) and a second end (62) where the first end (60) is a separate sub-section (92) of the barrier section (56) and the second end (62) is a further separate sub-section (94) of the same barrier section (56). As should be evident from the content of the invention, the barrier section does not need to be continuous between the ends of the barrier section where the barrier section or said separate sub sections engage the wedges of the compliant mechanism. The overall object of the barrier section is to provide the necessary constraints and guidance for the wedge movement when a radial force is exerted to one wedge as already described.

In a still further advantageous embodiment of the invention the area (20) where the core (12) and the curved arms (16,16',16") merge has increased stiffness and/or strength as compared to the curved arms. As this part of the compliant mechanism is subjected to the highest moment force during deformation of the curved arms and rotation of the core, it is advantageous to increase the strength in the transition area (20) of the curved arms to the core section. This increased strength may be achieved by slightly thicker material thickness as compared to the curved arms such that the force applied to the wedge is partly translated into rotation of the core around the hub.

In a further advantageous embodiment of the invention, a number of guide fins (74) are upstanding from the base (50), where the fins (74) are arranged between the barrier sections (56) and the hub (52). The fins help ensure that the compliant mechanism can only be mounted in one orientation, thereby limiting the risk of incorrect assembly. As will become apparent from the further description below, the guide fins may also serve as a suitable surface on which to adhesively fasten a lid on top of the base thereby enclosing the compliant mechanism.

In a still further advantageous embodiment of the invention, one curved arm including wedge (18') is designated as the operative arm (16'), referring to the curved arm that is subjected to the radial force by the user when operating the mechanism. This operative arm (16') may be designed with a slight difference in geometry.

In a still further advantageous embodiment of the invention, the free face (66) of the wedge (18') on the operative arm (16') is designed with an oblique angle relative to the radial force applied on the wedge (18'). When the compliant mechanism (10) is arranged in the base (50) the wedge (18') is positioned in a designated opening (58') and the operative arm (16') is arranged such that a free face (66) in the distal end of the wedge (18') is in contact with a first end face (64) of the barrier section (56) in the designated opening (58') where said free face (66) and the end face (64) are substantially parallel and arranged at an oblique angle (α) with respect to a radial (80) passing through the center C of the hub (52), where the angle (α) is selected between -20° to +20° with respect to the radial (80) through the center C and the point of the end face (64) closest to the center C, such that when the wedge (18') is pressed towards the center C, the compliant mechanism (10) will be rotated around the hub (52). In other embodiments α may be selected between -10° to +20° or even -5° to -2°.

The advantages of designating one of the curved arms as the operative arm lie in the fact that the arm may be designed stronger and move tangentially to the axis of rotation, thereby increasing the rotation of the compliant mechanism, which will cause the further wedges to engage in the end faces. Furthermore, the engagement surfaces between the wedge and the barrier section may be designed such that a smooth and reliable transition of the applied radial force to the wedge occurs resulting in a smooth radial movement of the wedge and at the same time a transition of part of the force into a rotational movement which will cause the further curved arms to rotate and thereby the further wedges arranged on the further curved arms engaging the end faces such that the wedges also are forced towards the center in the same manner as the wedge on the operative arm and move an equal amount inwards.

In a further alternative embodiment, a slight change is made in that one curved arm including wedge is designated the operative arm (16'), where, when the compliant mechanism (10) is arranged in the base (50) the wedge (18') is positioned in a designated opening (58') and the operative arm (16') is arranged such that a free face (66) in the distal end of the wedge (18') is in sliding contact with a first end face (64') of the barrier section (56) where said end face is an edge, or a curved end face.

As already described above the same type of movement of the compliant mechanism and all its parts is achieved as described above.

In an advantageous further embodiment of the invention other wedges arranged in other openings have forward edges (82) arranged at an opposite side of the wedge (18) to the free edge (66), where, when the compliant mechanism (10) is arranged in the base (50), the forward edge (82) may be in sliding contact with a second end face (84) of a barrier section (56).

By also allowing the further wedges to slide along end faces of the barrier section, a comparatively identical constraint and guidance of the further wedges is provided as for the designated wedge thereby creating a unified movement of all the wedges and curved arms once a radial force is applied to the operative arm.

In a further embodiment, the forward edge (82) and the second end face (84) are parallel and arranged at an angle β, with respect to a further radial (80') passing through the center C and the point of the second end face 84 closest to the center C, and where optionally the angle α may be equal to the angle β. With these relationships it is assured that a transition of the radial force applied to the designated wedge is translated into a movement such that the further wedges will be withdrawn equally to the operative arm's wedge as already explained above.

In a further advantageous embodiment, a locking element is inserted in an aperture in the base (50), where said locking element (76) has an overhang (86) which overhang (86), when the compliant mechanism (10) is arranged in the base (50), overlaps the compliant mechanism (10) and where, after a force is applied to a wedge causing the core to rotate, the overhang is able to drop down and block the compliant mechanism's ability to rotate back in the same direction. This locking element serves to assure that once the wedges have been withdrawn towards the hub, the locking element will engage the compliant mechanism in such a manner that it will not be able to rotate back and extend the wedges from the periphery of the base. In this manner the wedges are withdrawn for example to a position where the first part of the wedge from the center of the hub is flush with the periphery of the base such that the element in which the mechanism is incorporated may be removed in that the wedge does not engage any outside features. By forcing the locking element upwards relative to the compliant mechanism, the compliant mechanism is released and may rotate back to a position where the wedges extend from the periphery of the base. As will be explained further below this is an important aspect when a mechanism as described above is incorporated in a lid construction.

In a still further advantageous embodiment, each barrier section has an extent along the periphery (54) of between 1% and 95% of the periphery (54). As already briefly discussed above, the barrier section or subsections serve to constrain and guide the wedges during their radial and rotational movement and as such the barrier sections do not need to have an extent along the periphery which is particularly large. In such embodiments, it may be advantageous that the barrier sections are as short as possible whereas in other embodiments the barrier sections may extend from opening to opening in order to close off access to the interior of the base and the hub.

In a still further advantageous embodiment, the functionality of the mechanism is described such that when a force directed towards the center C is applied to a wedge, said wedge has a free edge (66) that is arranged so that it slides against a substantially parallel free edge on the barrier section (56), where said free edges are arranged at an angle (α) (0 - 45 deg) with respect to a radial passing through the center of the applied force on the wedge (18) and the center C of the hub (52), such that when the wedge is pressed towards the center C the core (12) will be rotated around the hub (52).

The invention is also directed to an openable enclosure with an open end (34) and a lid assembly (36) including a mechanism according to any of claims 1 to 13 for removably closing the open end (34), wherein a cover member (30) is fitted onto the barrier sections (56) enclosing the compliant mechanism (10) between the cover member (30) and the base (50), such that the wedges (18) protrude from the outer periphery of the barrier sections (56), where a groove or ledge (38) is arranged circumferentially on the inside of the enclosure body (32) adjacent the open end (34), where said groove or ledge (38) is adapted to receive the wedges (18) from the lid assembly (36), and where an opening (40) is provided through the enclosure body (32) positioned at the groove or ledge (38), such that a tool (42) may be inserted through the opening (40) depressing the wedge (18'), releasing the lid assembly (36) from the enclosure body (32). In this application, the wedges may extend past the periphery of the base and as such when the lid assembly is dimensioned correctly, the lid assembly may be inserted into the open end of the openable enclosure and the wedge extends into a groove or ledge. Thereby, the wedges will lock the lid assembly relative to the enclosure body. By providing a small opening in the enclosure body at a position where the opening is adjacent the operative wedge, it is possible by inserting a tool through the opening to apply a force to the wedge whereby the wedge will, as already discussed above, perform a radial movement towards the center of the hub and at the same time a slight rotation such that further wedges arranged in the compliant mechanism will also be withdrawn towards the center thereby releasing the wedges from the groove or ledge and also the lid assembly from the open end of the enclosure body. In this manner the lid assembly when inserted in the open end of the enclosure body appears to be completely smooth and it is only the opening in the wall of the enclosure body which may give access to release of the lid. By arranging seals and the like further away from the rim of the open end than the groove or ledge where the wedges will engage, it is possible to construct an enclosure which is substantially dust and watertight.

Finally, the invention is also directed to an earbud construction either wired or wireless where a mechanism as already discussed above is incorporated in the battery compartment as the battery compartment lid assembly. The same advantages particularly as described above with relation to providing a small opening in the wall of the battery compartment through which a small tool may be inserted in order to release a wedge from a groove or ledge creates a very smooth and noninvasive design such that the earbud construction may appear as not having any openable lids as the opening mechanism is hidden in the shape of the compliant mechanism.

The invention will now be described with reference to the accompanying drawing wherein

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Fig. 1 illustrates a mechanism according to the present invention;
Fig. 2a illustrates a plane view of a compliant mechanism arranged in a base;
Fig.2b illustrates a plane view of a compliant mechanism arranged in a base, with a pressure applied to a wedge;
Fig. 3 illustrates a plane view of a base with short sections;
Fig. 4a-c illustrates stages of the compression of the compliant mechanism;
Fig. 5 illustrates a plane view of a compliant mechanism arranged in a base with guide fins
Fig. 6 illustrates a set of earbuds;
Fig. 7 illustrates an earbud construction including a lid in which lid a compliant mechanism is incorporated;
Fig. 8 and 9 illustrates a detail of the lever;
Fig. 10 illustrates a detail of the lid release mechanism;
Fig. 11 illustrates an embodiment with barrier sub-sections;
Fig. 12 illustrates an alternative embodiment of engagement between wedge and barrier section.
Fig. 13 illustrates a cross-section through a lid construction where the wedges are engaging ledges.

### Detailed Description of the Invention

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

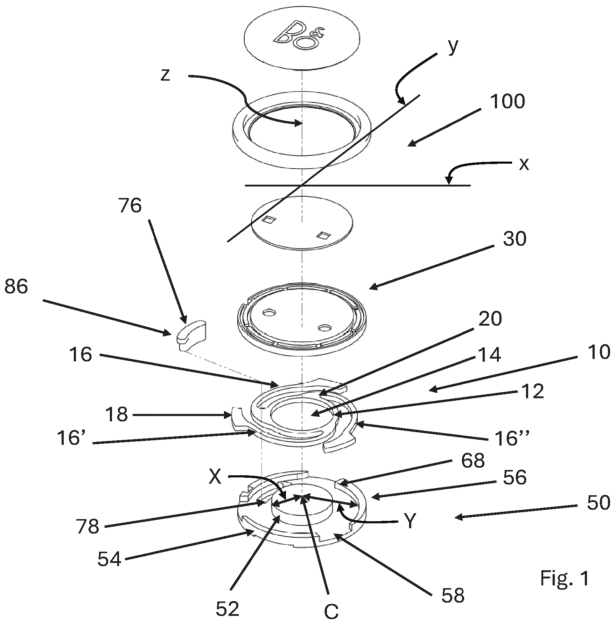

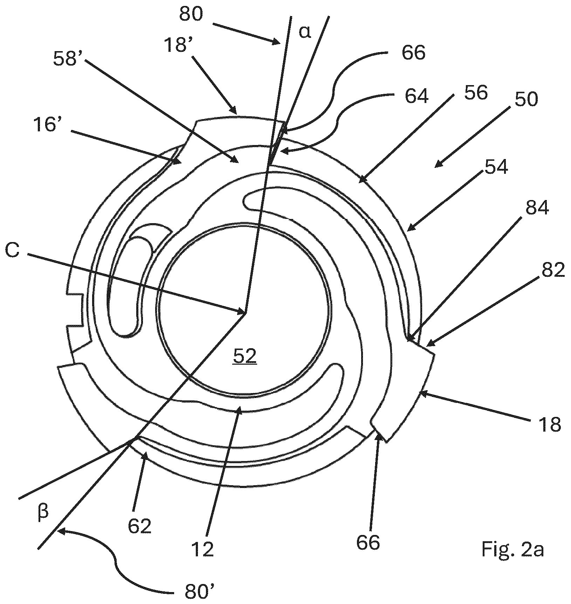

In figure 1, a mechanism according to the present invention is illustrated where the mechanism comprises a compliant mechanism 10 and a base 50. Also illustrated are further features which will be discussed below but initially, the attention is directed to the compliant mechanism 10 and base 50. Turning briefly to figure 2a, the compliant mechanism 10 is mounted in the base 50 by arranging a hub 52 provided as an upstanding feature from the base 50 through a fitting aperture 14 in the compliant mechanism 10. The hub 52 and the aperture 14 are sized such that the compliant mechanism may freely move/rotate relative to the hub 52.

In the particular embodiment illustrated in figure 1, the compliant mechanism 10 is constructed with a core 12 from which three curved arms 16,16',16" extend. A central opening 14 is provided in the core 12 as already discussed above. The curved arms 16,16',16" are each provided with a wedge 18 at a free distal end of the curved arms. The compliant mechanism 10 is made from a flexible material such that the curved arms 16,16',16" may be deformed without being permanently deformed but may flex back to their original position.

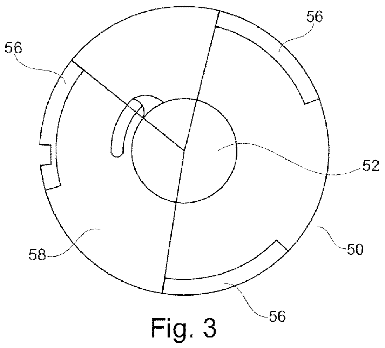

In the base 50, a number of barrier sections 56 are provided along the periphery 54 of the base. Between adjacent barrier sections 56, openings 58 are provided. In the particular embodiment illustrated in figure 1, the openings 58 are slightly larger than the wedges 18 such that the wedges 18 may be fitted into the openings 58 with a certain play. However, as illustrated with reference to figure 3, the barrier sections 56 may be substantially smaller, i.e. the openings 58 may be substantial larger compared to the extent of the barrier sections 56. This will further be evident from the explanation below. However, in some embodiments it is advantageous to allow the barrier sections 56 to cover most of the periphery 54 of the base 50 only leaving peripheral space for the openings 58 as will be further explained below.

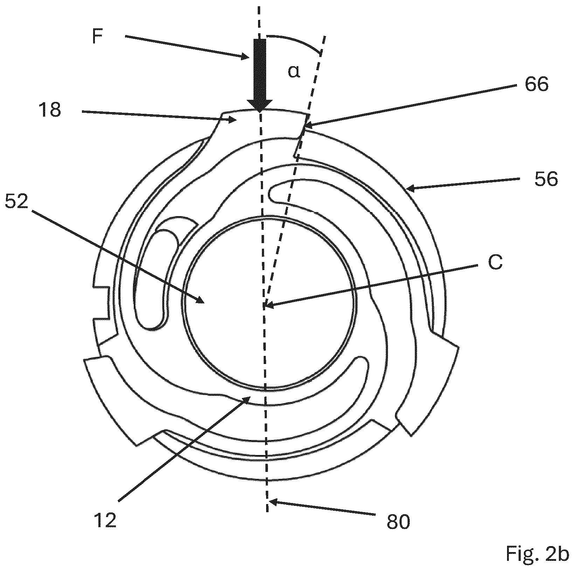

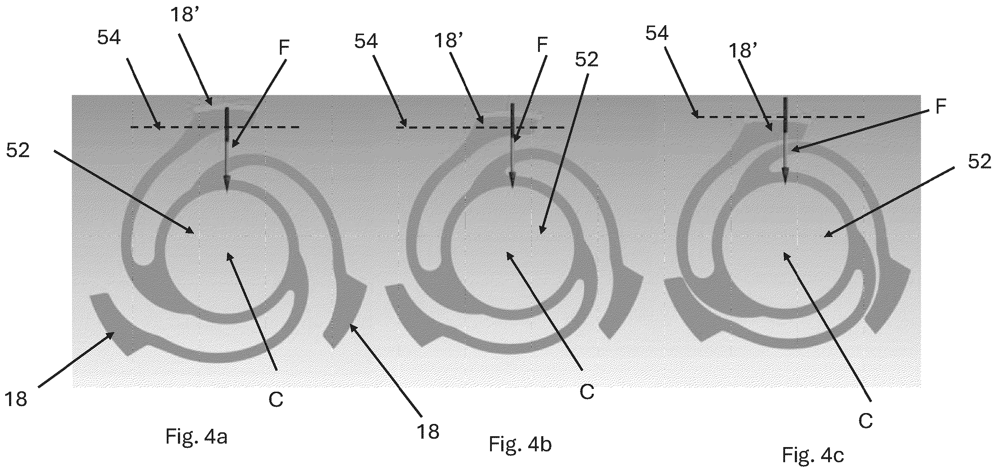

When assembling the mechanism, the compliant mechanism 10 is arranged in the base by fitting the aperture 14 over the hub 52 and allowing the wedges 18 to extend into the openings 58. This is illustrated in figure 2. The wedges 18 extend outside the periphery 54 of the base 50 but due to the compliancy of the compliant mechanism 10, they may be moved inside the periphery of the base 50. Turning to figures 4a, 4b and 4c, the different stages of compression of the compliant mechanism 10 relative to the periphery 54 is illustrated. The periphery 54 is illustrated by a dashed line where the smallest distance between the center C of the hub 52 and the periphery 54 is constant as is the case with the embodiment illustrated in figure 1.

In the embodiments illustrated in the figures the periphery 54 is substantially circular. However, the periphery may for example also be triangular, square or other geometric shapes. For example, if the base is square, and the periphery therefore also square, it is advantageous to provide four curved arms on the compliant mechanism 10. Likewise, if the base has a pentagon shape five curved arms may be provided etc.

When a radial force/pressure F is exerted on the wedge 18', the wedge 18' will move closer to the center. At the same time, the further wedges 18 will engage the barrier sections 56 (not illustrated) and will likewise be moved closer to the center C. In figure 4b is illustrated an intermediate position where the wedge 18' is only slightly protruding from the periphery 54 and likewise, the further wedges are also slightly withdrawn due to the rotation of the compliant mechanism 10 around the hub 52 and the wedges 18', 18 interacting with the barrier sections 56. At a certain point as illustrated in figure 4c, the wedge 18' is substantially flush with the periphery 54 as the further wedges 18 are likewise withdrawn and flush with the periphery 54. In figure 4a, 4b and 4c is illustrated how a radial force F exerted on one wedge 18' causes a slight rotation which in co-operation with the barrier sections 56 causes the further wedges 18 to be withdrawn towards the center C of the hub 52.

Turning back to figure 2a, a plane view of the compliant mechanism 10 is illustrated arranged inside the base 50 as explained above by fitting the aperture 14 in the compliant mechanism 10 over the hub 52 of the base 50. The wedges 18 extend through openings 58 such that the wedges 18 extend beyond the periphery 54 of the base 50. In the embodiment illustrated in figure 2, one of the openings 58 is referred to as designated opening 58'. This opening is created by a break (i.e. a section without a barrier) in the barrier such that the barrier sections 56 have a first end face 64. This end face 64 of the barrier sections 56 is arranged at an oblique angle a with respect to radial 80 through the center of the hub. Likewise, a free edge 66 of the wedge 18' is angled such that the free edge 66 of the wedge 18' is parallel to the first end face 64 of the barrier section 56. As a force/pressure is applied as described with reference to figures 4a, 4b and 4c, the free edge 66 of the wedge 18' will slide along the first end face 64 of the barrier section causing the compliant mechanism 10 to rotate slightly and at the same time the wedges 18, 18' will be moved towards the center C of the hub 52. The further wedges 18 are provided with forward edges 82. The barrier sections are in a second end 62 provided with a second end face 84 which second end face 84 is also arranged with an angle β relative to a radial passing through the center C of the hub and the second end face 84 of the barrier section 56. The second end face 84 is parallel with the forward edge 82 of the wedge 18 such that as the force/pressure depresses the wedge 18' in the designated opening 58' and this wedge slides along the parallel surfaces of the first end face 64 and the free edge 66 of the wedge, the further wedges 18 will slide along the parallel edges i.e. the forward edge 82 of the wedge and the second end face 84 of the barrier section 56. In this manner, the wedges 18 of the compliant mechanism 10 will move simultaneously towards the center C of the hub 52 when a force is applied to the wedge 18' in the designated opening 58'. The movement of the wedges 18 may therefore be described as a radial movement towards the center C together with a slight rotational movement of the core 12 of the compliant mechanism 10. As discussed above with reference to figure 3, the barrier sections need only be relatively short along the periphery 54 in that they need to be sufficiently strong to withstand the forces transferred from the wedge to the barrier section when the wedge is depressed as described above. Therefore, the barrier sections 56 need only have an extent enough to provide a first end face and/or a second end face 84 arranged at an oblique angle to a radial 80, 80'.

Similarly, in fig. 2b is illustrated a situation where a pressure (F) is directed towards the center C, said pressure applied to a wedge (18). The wedge (18) has a free edge (66) that is arranged so that it slides against a substantially parallel free edge on the barrier section (56). The free edges are arranged at an angle (α) (0 - 45 deg) with respect to a radial (80) passing through the center of the wedge (18) and the center C of the hub (52), such that when the wedge is pressed towards the center C the core (12) will be rotated around the hub (52).

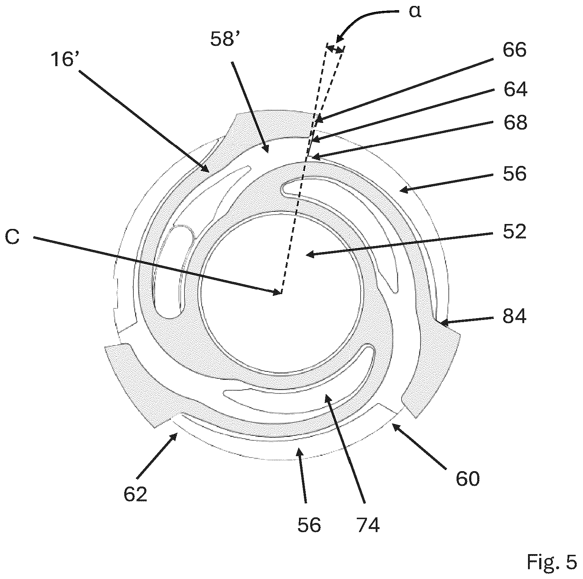

In some embodiments, see for example in figure 5, guide fins 74 may be provided in the base 50 between the hub 52 and the barrier sections 56. The guide fins 74 help ensure that the compliant mechanism 10 can only be mounted in one orientation, thereby limiting the risk of incorrect assembly.

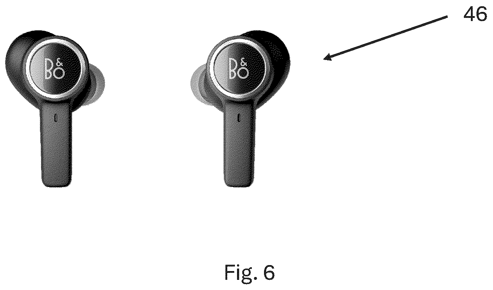

Turning briefly to figure 6, a pair of earbuds are illustrated. Earbuds are wireless devices suitable to be fitted in the ear of the user in order for the user to be able to listen to music or other sounds. Earbuds 46 need to be very compact and at the same time reproduce sound as true to the original sound as possible. Furthermore, due to the wireless characteristic, a power source, typically a battery needs to be housed in the earbuds. Typically, the batteries will be of the rechargeable type but even for the best quality of batteries, the batteries may wear out before the earbuds as such wear out and therefore it may be desirable to be able to change the batteries in earbuds 46 as illustrated in figure 6.

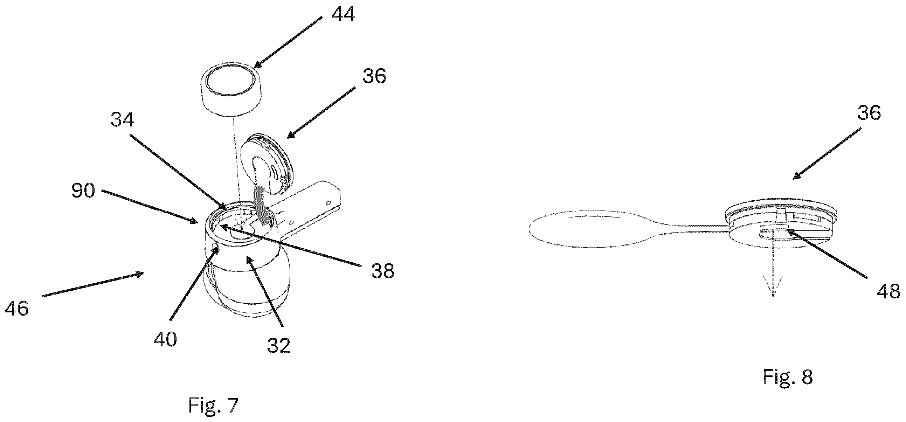

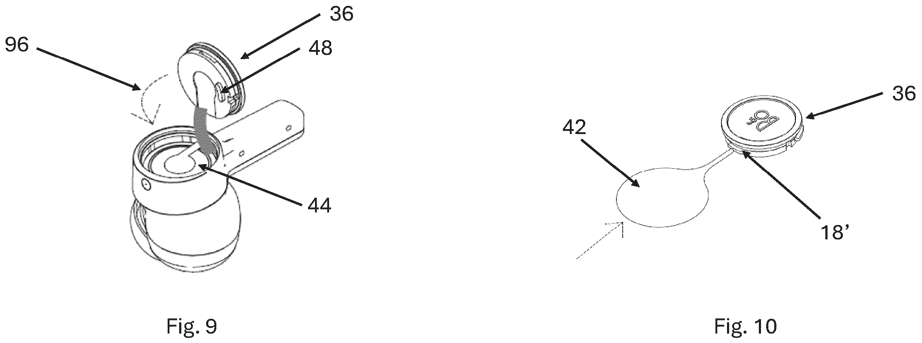

For this purpose, as illustrated with reference to figure 7, a battery 44 is housed in an enclosure 34 and the enclosure is closed off with a lid 36. The lid construction 36 comprises a compliant mechanism 10 as described above and as depicted in the exploded view of such a lid indicated in figure 1. For the lid construction, an additional feature is provided in the shape of a locking mechanism comprising a locking element 76 arranged in an aperture 78. The locking element 76 has an overhang 86. When a wedge 18 is moved radially towards the center C as described above, the compliant mechanism 10 will slightly rotate around the hub 52. Once the wedge 18' is completely depressed i.e. when the wedge is flush with the periphery 54 of the base 50 as explained for example with reference to figure 4c, the locking element 76 will drop down into the aperture 78 whereby the overhang 86 will engage the compliant mechanism 10 such that if the wedge 18' is released, the compliant mechanism 10 will not be able to rotate back into its original position i.e. the wedges will remain compressed and flush with the periphery 54 of the base 50. In this position it is possible to lift the lid 36 as illustrated in figure 7. As the locking element 76 drops into the aperture 78, a lever 48 extends through the aperture and past the bottom of the base 50. Once the battery 44 has been replaced, the lid assembly 36 may as illustrated in figure 9 be moved back as indicated by the arrow 96 into a closed position. As the lid assembly 36 and in particular the lever 48 comes into contact with the top of the battery 44, the lever will be pressed upward whereby the overhang 86 of the locking element 76 will be disengaged from the compliant mechanism 10 which due to its flexible/elastic properties will rotate back to the original position where the wedges 18 will extend beyond the periphery 54 of the base 50 as illustrated for example with reference to figure 5. Turning back to figure 7, the openable enclosure 32 in which the battery 44 may be housed is provided with a groove or ledge 38 on an inside wall adjacent to the open end 34 of the enclosure body 32. As the lid assembly 36 is pressed against the battery 44 and the lever 48 is forced upwards whereby the overhang's engagement with the compliant mechanism 10 is released and the compliant mechanism rotates back whereby the wedges 18 are extended past the periphery 54, the wedges will engage the groove or ledge 38 provided adjacent the open end of the enclosure body 32. In this matter, the lid assembly 36 will be locked into position such that the battery 44 remains in the enclosure body 32. The enclosure body 32 will be provided with the necessary electrical connections in order to transfer the electrical energy from the battery to the electronics inside the earbud device and also any necessary seals sealing off the battery compartment from dust, water etc. may also be provided but are for reasons of clarity not illustrated in the figures.

In order to release the lid assembly 36 from the enclosure body 32, a small opening 40 is provided adjacent an open end of the enclosure body 34, see fig. 7. A special opening tool 42 (see fig. 10) is provided having a pointed end. The pointed end of the tool 42 may be inserted through the opening 40, as illustrated in fig. 10. When the tool is inserted in the opening 40 the pointed end of the tool 42 will engage a wedge 18 forcing the wedge 18 radially towards the center C of the hub 52 as explained with reference to figures 1 and in particular figures 4a, b and c. Normally this wedge 18 will be the wedge integral with the designated operative arm 16'.

The wedges are withdrawn (pressed towards the center C) and come flush with the periphery 54 of the lid assembly 36 / base 50. In this position the locking element 76 will engage the compliant mechanism 10 and retain it in its compressed position such that the lid assembly 36 may be removed from the enclosure body 32.

In the particular embodiment discussed above the base is substantially circular but it is clear that other geometrical shapes are possible where the advantageous features of particularly compliant mechanisms may be utilized. For example, in embodiments where three curved arms are used the base may also be triangular. If four curved arms are provided, also square or rectangular base configurations may be utilized without departing from the mechanical principles of the present invention.

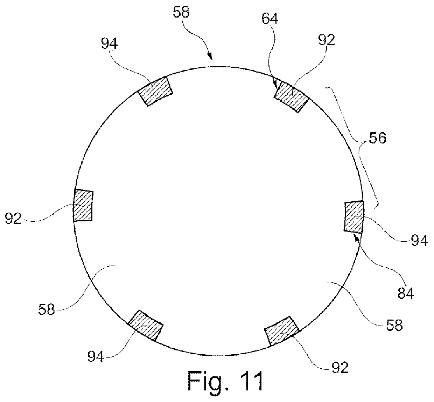

In fig. 11 an embodiment is illustrated where the barrier sections are separated into two separate subsections 92, 94. In the first end, the separate subsection 92 is provided with a first end face 64 and the further separate subsection 94 of the barrier section is provided with a second end face 84. In this manner the two subsections 92, 94 provide the end faces 64, 84 which are necessary in order to make the compliant mechanism 10 function properly. Therefore, a part of the barrier section 56 is in this embodiment not "materialized" but is substituted by the two subsections 92, 94.

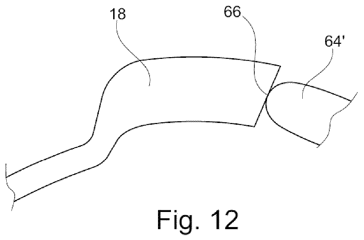

Further in figure 12 is illustrated a detail of the engagement between the wedge 18 and the first end face 64 of a barrier section 56. In this embodiment the first end face 64' is provided with a curved end face which slidingly engages the free edge 66 provided on the wedge 18. The curved shape of the first end face 64' of the barrier section 56 may also be a sharp edge such that the contact between the free edge 66 of the wedge 18 and the barrier section 56 is a point. What is important is the fact that the free edge 66 is able to be guided in its sliding movement by the first end face of the barrier section 56.

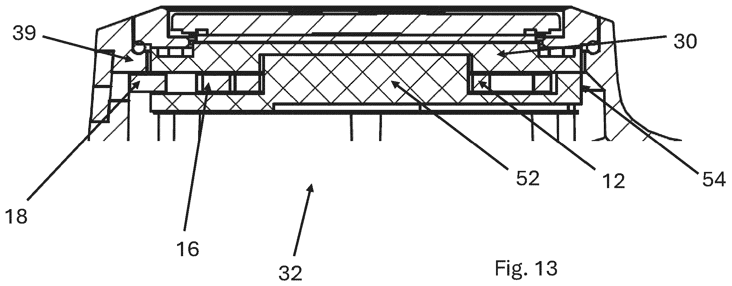

Turning to fig. 13 a further embodiment of the invention is illustrated where the wedges 18, when extending past the periphery 54 in a lid construction is maintained in the enclosure body 32 by ledges 39. The ledges 39 are arranged such that they will retain the lid in a closed position in the enclosure body as the wedges 18 are engaged underneath the ledges 39.

### Reference list:

- 10: compliant mechanism
- 12: core
- 14: central opening
- 16: curved arm (16,16',16")
- 16': operative arm
- 18,18': wedge
- 20: area
- 30: cover member
- 32: enclosure body
- 34: open end (of enclosure body)
- 36: lid assembly
- 38: groove
- 39: ledge
- 40: opening
- 42: tool
- 44: battery
- 46: earbud construction
- 48: lever
- 50: base
- 52: central hub
- 54: periphery
- 56: barrier sections
- 58: openings
- 58': designated opening
- 60: first end (of barrier section)
- 62: second end (of barrier section)
- 64: first end face (of barrier section)
- 66: free edge (of wedge)
- 68: inner side face of barrier section
- 74: guide fin
- 76: locking element
- 78: aperture
- 80, 80': radial
- 82: forward edge (of wedge)
- 84: second end face (of barrier section)
- 86: overhang
- 90: openable enclosure
- 92: Separate sub-section of the barrier section
- 94: Further separate sub-section of the barrier section
- 96: arrow indicating lid closing direction
- 100: common x-y plane

- C: center of hub
- F: force/pressure
- α: oblique angle
- β: angle
- X: radius of hub
- Y: radius of barrier sections

## Claims

1. A mechanism comprising a compliant mechanism (10) and a base (50), where:
a. The base (50) is provided with a central circular hub (52) upstanding from the base (50), said hub (52) having a radius X from a center C of the hub (52), and at a distance with a radius Y from the center C is formed a number of barrier sections (56) where the radius Y is measured to an inner side face (68), such that a number of openings (58) between barrier sections (56) together with the barrier sections (56) define a periphery (54);
b. The compliant mechanism (10) has a core (12) with a central opening (14) said opening having a diameter larger than 2 x X, and that a plurality of curved arms (16,16',16") extends from said core (12) in a x-y plane (100) common for the central opening (14), the core (12) and the curved arms (16,16',16"), where each curved arm (16,16',16") at a distal end is provided with a wedge (18), where each wedge (18) when the compliant mechanism (10) is mounted in the base (50) by passing the central opening (14) over the hub (52), is adapted to pass through an opening (58) in the periphery (54) of the base (50).

2. A mechanism according to claim 1 wherein the radius Y increases from a first end (60) of a barrier section (56) to a second end (62) of the same barrier section (56).

3. A mechanism according to claim 1 wherein the barrier section (56) has a first end (60) and a second end (62) where said first end (60) has a first end face (64) and the second end (62) has a second end face (84), where said end faces are arranged at an angle with respect to a radial (80) passing through the center C of the hub (52) and the point of the end face (64) closest to the center C.

4. A mechanism according to claim 1 wherein the barrier section (56) has a first end (60) and a second end (62) where the first end (60) is a separate sub-section (92) of the barrier section (56) and the second end (62) is a further separate subsection (94) of the same barrier section (56).

5. A mechanism according to claim 1 where the area (20) where the core (12) and the curved arms (16,16',16") merge has increased stiffness and/or strength as compared to the curved arms.

6. A mechanism according to claim 1 wherein a number of guide fins (74) are upstanding from the base (50), where the fins (74) are arranged between the barrier sections (56) and the hub (52).

7. A mechanism according to claim 1, wherein one curved arm (16') including wedge (18') is designated as the operative arm (16'), where, when the compliant mechanism (10) is arranged in the base (50) the wedge (18') is positioned in a designated opening (58') and the operative arm (16') is arranged such that a free edge (66) in the distal end of the wedge (18') is in contact with a first end face (64) of the barrier section (56) in the designated opening (58') where said free edge (66) and the end face (64) are substantially parallel and arranged at an oblique angle (α) with respect to a radial (80) passing through the point of applied force and the center C of the hub (52), where the angle (α) is selected between -20° to +20° with respect to the radial (80) through the center C and the point of the end face (64) closest to the center C, such that when the wedge (18') is pressed towards the center C, the compliant mechanism (10) will therefore be rotated around the hub (52).

8. A mechanism according to claim 1, wherein one curved arm (16') including wedge (18') is designated as the operative arm (16'), where, when the compliant mechanism (10) is arranged in the base (50) the wedge (18') is positioned in a designated opening (58') and the operative arm (16') is arranged such that a free edge (66) in the distal end of the wedge (18') is in sliding contact with a first end face (64') of the barrier section (56) where said end face is an edge, or a curved end face.

9. A mechanism according to claim 7 or 8 where other wedges (18) arranged in other openings (58) have forward edges (82) arranged at an opposite side of the wedge (18) to the free edge (66), where, when the compliant mechanism (10) is arranged in the base (50), the forward edge (82) may be in sliding contact with a second end face (84) of a barrier section (56).

10. A mechanism according to claim 9 where the forward edge (82) and the second end face (84) are parallel and arranged at an angle β, with respect to a further radial (80') passing through the center C and the point of the second end face 84 closest to the center C, and where optionally the angle α may be equal to the angle β.

11. A mechanism according to claim 1 where a locking element (76) is inserted in an aperture (78) in the base (50), where said locking element (76) has an overhang (86) which overhang (86) when the compliant mechanism (10) is arranged in the base (50) overlaps the compliant mechanism (10) and where after a force is applied to a wedge causing the core to rotate, the overhang drops down and blocks the compliant mechanism's ability to rotate back in the same direction.

12. A mechanism according to claim 1 wherein each barrier section (56) has an extent along the periphery (54) of between 1% and 95% of the periphery (54).

13. A mechanism according to claim 1 where when a pressure (F) directed towards the center C is applied to a wedge, said wedge has a free edge (66) that is arranged so that it slides against a substantially parallel free edge on the barrier section (56), where said free edges are arranged at an angle (α) (0 - 45 deg) with respect to a radial passing through the center of the wedge (18) and the center C of the hub (52), such that when the wedge is pressed towards the center C the core (12) will be rotated around the hub (52).

14. Openable enclosure (90) having an enclosure body (32) with an open end (34) and a lid assembly (36) including a mechanism according to any of claims 1 to 13 for removably closing the open end (34), wherein a cover member (30) is fitted onto the barrier sections (56) enclosing the compliant mechanism (10) between the cover member (30) and the base (50), such that the wedges (18) protrude from the outer periphery of the barrier sections (56), where a groove (38) is arranged circumferentially on the inside of the enclosure body (32) adjacent the open end (34), where said groove (38) is adapted to receive the wedges (18) from the lid assembly (36), and where an opening (40) is provided through the enclosure body (32) positioned at the groove (38), such that a tool (42) may be inserted through the opening (40) depressing the wedge (18'), releasing the lid assembly (36) from the enclosure body (32).

15. Openable enclosure (90) according to claim 14 dimensioned to accommodate a battery (44) in an electronic device construction (46).

16. Earbud construction where a mechanism according to any of claims 1 to 13 is incorporated in a battery compartment lid assembly (36).
